Europäisches Patentamt

European Patent Office

Office européen des brevets

(11) Publication number: **0 384 556**
**A2**

## EUROPEAN PATENT APPLICATION

(21) Application number: **90300065.1**

(51) Int. Cl.5: **G06E  1/02**

(22) Date of filing: **04.01.90**

(30) Priority: **22.02.89 GB 8903997**

(43) Date of publication of application:
**29.08.90 Bulletin  90/35**

(84) Designated Contracting States:
**BE DE FR IT NL**

(71) Applicant: **STC PLC**
**1B Portland Place**
**London W1N 3AA(GB)**

(72) Inventor: **Scarr, Robert Walter Alister**
**63 Lower Street**
**Stansted Essex CM24 8LR(GB)**

(74) Representative: **Dupuy, Susan Mary et al**
**STC Patents West Road**
**Harlow Essex CM20 2SH(GB)**

(54) **Data base searching.**

(57) A holographic optical correlator includes a matched optical filter and control means therefor including a memory. In use, searching for occurrences of an item to be found is carried out by the control means controlling the input and Fourier transform planes of the filter and a coherent light source for parallel optical processing of the memory content and the output plane of the filter provides information to the control means as to the location in the memory of occurrences of said item. The item and the memory as input to the input plane are coded by means of an M out of N code, where M is a constant in order to solve threshold tolerance problems. Specifically a sparse code (3 out of 13) is used for octet data. Preferably the item recognition is a two stage process. In a first stage, individual characters of a string are matched and in a second stage there is recognition of the correct relative juxtaposition of characters in the string.

*Fig.1a.*

## DATA BASE SEARCHING.

This invention relates to data base searching and in particular to methods and systems therefore employing optical techniques.

We have previously proposed an associative optical memory system in our GB Patent Specification 2161263B, and the present proposals proceed therefrom. The contents of GB2161263B are incorporated herein by reference.

According to claim 1 of GB 2161263B there is provided an associative optical memory system comprising an optical imaging system, in the form of a matched optical holographic filter, and, coupled thereto, a digital computing system including a memory, and wherein in use for searching the computer system memory for occurrences of an item the computing system controls the input and Fourier transform planes of the filter and a coherent light source for parallel optical processing of the memory content, and the output plane of the filter provides information to the computing system as to the location in the memory of the occurrences of said item.

The increasingly widespread use of mass optical and magnetic means for storing un-indexed data means that there is a requirement to search large amounts of information in periods of not more than a few seconds. Electronic systems such as CAFS (Content Addressable File Store) enable megabytes of data to be searched against a key in periods of less than ten seconds. Data bases of the gigabyte order require search times rather shorter than those currently available by electronic means. Optics provides a potential means, probably in combination with electronics, of searching in parallel with a view to reducing the net search time. The present invention is concerned with a content addressable memory as in GB 2161263B and where the required information is, rather than what it is. The actual retrieval of the information once found within the mass of data is a secondary operation which could use optical techniques, although it is presently considered that it is more likely to use electronic techniques.

Currently data is stored largely in the digital form of 8 bit or octet form such as an 8-bit ASCII code but one can anticipate an increasing need, in the future, to treat documents in facsimile form or in some mixed mode with hand-written comments, logos, diagrams etc. being distinguished from coded text but linked together within the storage medium. CAFS involve a few parallel channels processing serially strings of binary coded characters and are unsuited to the recognition of graphical material. There are, of course, optical and electronic designs for pattern recognisers that provide a more general approach than CAFS do.

Ideally any pattern recogniser should be able to recognise a pattern independently of translation, scale and rotation. The use of a Fourier transform enables patterns to be recognised independently of translation, and optics provides a virtually instantaneous means of Fourier transforming large amounts of data in parallel. An optical Fourier transform with some scaling means provides a means of combining scaling and translation. Rotation is a more difficult problem. The present invention is, however, concerned with a translation-independent optical matched filter using real-time holographic recording.

There is very considerable literature on the use of optical Fourier transforms in the field of pattern recognition, memory read out and associative memory. Very few of these developments have come to fruition, while the more conventional straight imaging serial approach to optical disc reading and writing has succeeded. It is necessary to make a distinction between patterns of known semantic content (i.e. text) and "pure" patterns (e.g. facsimiles) where the "meaning" is not known. The former can be optimally coded because the actual representation of the character is not important, whereas the latter can be processed (e.g. edges enhanced) or transformed, but the actual form of the input information is invariant. The present invention is particularly concerned with the former and especially with coding and the recognition of coded characters.

According to one aspect of the present invention there is provided a holographic optical correlator including a matched optical filter and coupled thereto a control means including a memory, and wherein in use for searching the memory for occurrences of an item the control means controls the input and Fourier transform planes of the filter and a coherent light source for parallel optical processing of the memory content and the output plane of the filter provides information to the control means as to the location in the memory of occurrences of said item, wherein the said item in the input plane is a coded pattern and the memory in the input plane comprises a plurality of similarly coded patterns and wherein the code comprises an M out of N code, where M is a constant.

According to another aspect of the present invention there is provided a holographic optical correlator including a matched optical filter and coupled thereto a control means including a memory, and wherein in use for searching the memory for occurrences of an item the control means controls the input and Fourier transform planes of the filter and a coherent light source for parallel optical processing of the memory content and the output plane of the filter provides information to the control means as to the location in the memory of occurrences of said item, wherein the said item in the input plane is a coded pattern and the memory in the input plane comprises a plurality of similarly coded patterns and wherein to achieve uniform hologram illumination in the Fourier transform plane and high diffraction efficiency of holographic material of small dynamic range employed in the Fourier transform plane means are provided to add a non-random phase variation whereby information to be recorded has a flat frequency spectrum.

According to a further aspect of the present invention there is provided a holographic optical correlator including a matched optical filter and coupled thereto a control means including a memory, and wherein in use for searching the memory for occurrences of an item the control means controls the input and Fourier transform planes of the filter and a coherent light source for parallel optical processing of the memory content and the output plane of the filter provides information to the control means as to the location in the memory of occurrences of said item, wherein the said item in the input plane is a coded pattern and the memory in the input plane comprises a plurality of similarly coded patterns and wherein to achieve uniform hologram illumination in the Fourier transform plane and high diffraction efficiency of holographic material of small dynamic range employed in the Fourier transform plane the feature or spot size of the coded patterns is reduced to a value which the system is incapable of resolving whereby information to be recorded has a flat frequency spectrum.

According to yet another aspect of the present invention there will be provided a method of searching a data base for occurrences of an item including the steps of forming a hologram of the data base in the Fourier transform plane of a matched optical filter and loading the item sought in the input plane of the matched optical filter, illuminating the loaded data base with coherent light of the same wavelength as employed to produce the hologram, filtering the light in the Fourier transform plane, and detecting any correlation, and thus recognition, of the item sought and the data base at the output plane of the matched optical filter, further including the steps of coding the item sought and the data base by means of an M out of N code, where M is a constant.

According to yet a further aspect of the present invention there is provided a holographic optical correlator arranged to recognise strings of characters and comprising a two-stage recognition system, wherein in the first stage individual characters of the string are matched and in the second stage means are provided to recognise when the matched characters are in correct relative juxtaposition for string recognition.

Embodiments of the invention will now be described with reference to the accompanying drawings, in which:

Figure 1a illustrates a basic matched filter arrangement and

Figure 1b illustrates the arrangement of Figure 1a together with a basic digital computing system;

Figure 2(a)-(d) illustrate amplitude spectra of a number of pulse trains;

Figure 3 illustrates correlation between two 4-bit patterns which differ by one bit

Figure 4 illustrates pattern substitution of a three character string;

Figure 5 illustrates a three character string with side lobe interference;

Figure 6 illustrates orthogonal displacement of the input string;

Figure 7 illustrates relative information density as a function of string length;

Figure 8 illustrates a four character string with mismatch on the third character, (PWB = 1);

Figure 9 illustrates a four character string with mismatch on the third character, (PWB = 4), and

Figure 10 illustrates a four character string with mismatch on the third character with different PWB values for the object beam relative to that of the reference and scene beams.

The processing of data by using optical Fourier transform involves the disadvantage that it requires thresholding in a non-binary sense, i.e. a distinction is required not between levels representing a "1" and a "O", but between levels representing N and N-1 where N > 1. All systems are subject to imperfections that reduce their fractional tolerance ((N-1)/N) and hence N cannot be allowed to become large.

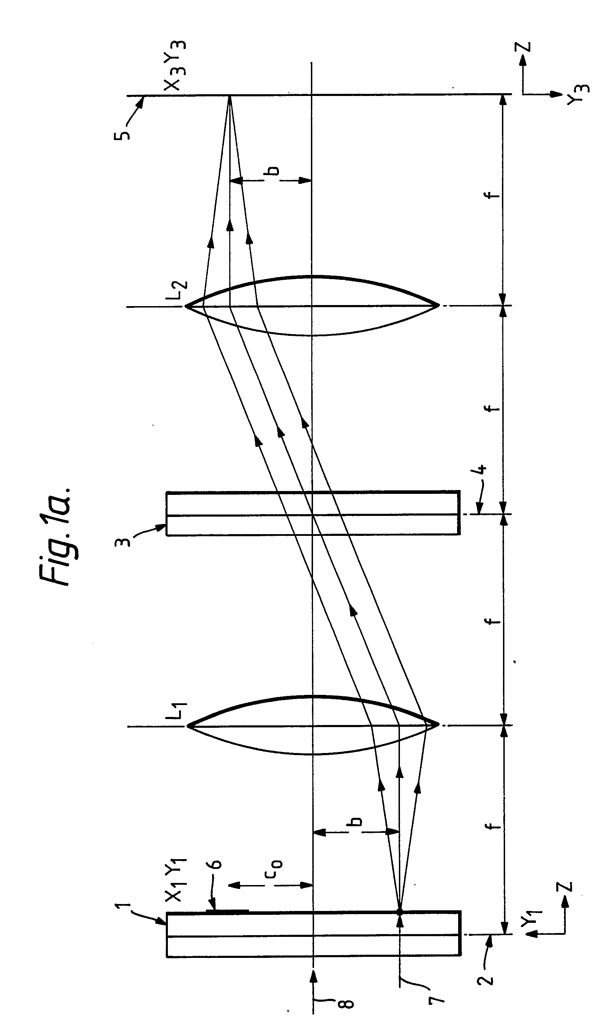

A basic matched filter arrangement for pattern correlation is illustrated in Fig. 1a. It consists of an input device 1 situated in an input plane 2, a lens L1, a two-dimensional holographic recording device 3 in the spatial frequency or Fourier transform plane (FTP) 4, a second lens L2 and an output device in the output or correlation plane 5. The three planes 2, 4 and 5 are here assumed to be at the foci of the two lenses L1 and L2. The correlation process involves the joint recording of an object and reference bean and the subsequent recovery of the one from the other by the input of what will be called, in general, the "scene".

Lens L1 acts to provide the Fourier transform of images in the input plane 2 at the FTP 4, and lens L2 acts to provide the inverse Fourier transform of images at the FTP 4 at the output plane 5. The Fourier transform of a real image at the input plane 1 which is illuminated by coherent light (laser pulse) is an interference pattern or hologram.

3

As discussed in GB 2161263, the first stage in production of a filter is to record a hologram in the FTP 4 corresponding to the information to be recognised. To do this a representation of the information to be recognised (image 6) is placed in the input plane 1 (centred at $C_o$) and a point source (laser) reference beam (arrow 7) located at $X = 0$, $Y_1 = - b$. The coherent light source (laser) used to illuminate image 6 is coherent with the reference beam 7 and hence differs from it only in amplitude and phase. The resultant hologram in the FTP4 is recorded on suitable material thereat. The lens L2 and output plane 5 are not required for this process.

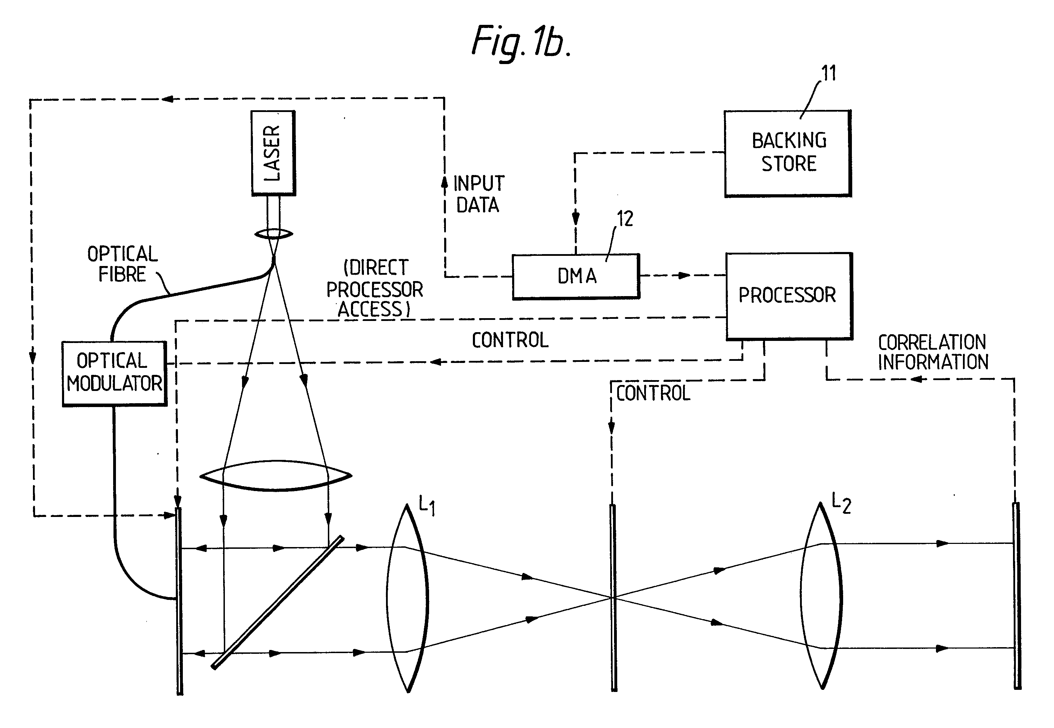

Having thus recorded the hologram of the information to be recognised, a set of unknown patterns is placed in the input plane 2 and illuminated by a pulse of coherent light of the same wavelength as is used in the recording process. A basic property of a hologram is that if it is recorded by illumination of two scenes S1 and S2 and then exposed to light from S1, a real or virtual image of S2 will result, or vice versa. In a matched filter a real image is produced at the output plane 5. S1 can be regarded as the point source and S2 initially as the information being recorded and latterly as the unknown pattern. If the unknown pattern contains the information to be recognised, the result will be a representation of the point source in the output plane 5. This represents the auto correlation, or matching, of the input to the filter. With suitable design, the auto correlation spot will be more intense than any cross correlation terms and thus for example, a peak detector can determine its presence and position in the output plane 5. Its position in the output plane bears a one-to-one correspondence with its position in the input plane. Thus "where" the information is can be conveyed to a processor, for example, which then determines "what" the information is, as described in GB 2161263B. As also described therein the set of unknown patterns may be directly loaded into the input plane from a backing store, such as a magnetic backing store, using direct memory access. Figure 1b illustrates a matched filter as in Figure 1a together with a digital computing system as described in GB 2161263B and indicates the backing store 11 and direct memory access 12. The digital computing system comprises a control means for the matched filter.

To achieve high diffraction efficiency from a recording material of small dynamic range, such as BiSo, requires uniform hologram illumination by the laser pulse. Uniform illumination can be achieved if the information to be recorded has a flat spectrum but normally, if it is untreated, the information has a strong low frequency component leading to situations where the centre of the hologram is much more brightly illuminated than is periphery. Two known techniques for improving this situation are random phase and sampling.

The effect of sampling is to break up large flat areas of the input scene into high frequency components and eliminate the low frequency components. If the input scene does not contain large illuminated areas, as in the case where binary information is represented by points of light, then sampling is unnecessary. The effect of random phase is to flatten the spectrum and this is of particular interest when the scene contains a large number of items with highly correlated low frequency spectrum, as in the case for a pattern of dots, for example. However, if the dot size approaches the resolvable spot size, then the use of random phase is not appropriate because recognition is dependent on the phase of each dot, which is unpredictable.

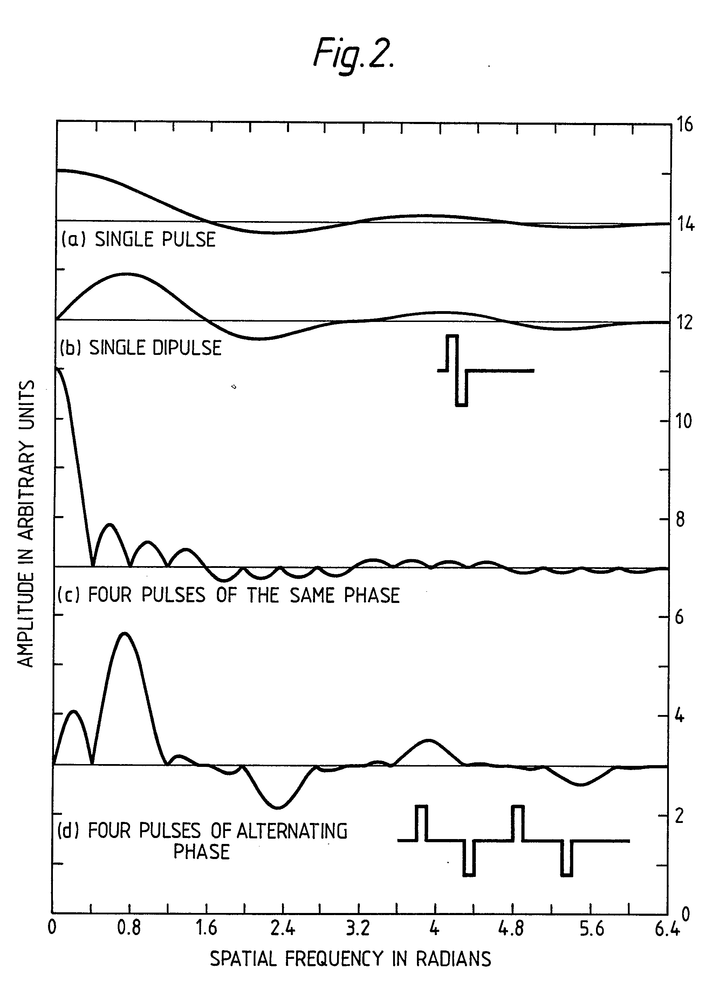

There is, however, a third technique for improving the situation and this is proposed here, namely non-random phase variation. This may take either of the following forms (see the insets adjacent to the curves of Figs. 2b and 2d), namely:-

    i) each dot is represented by a dipole or dipulse $(\theta, \theta + \pi)$;

    ii) alternate dots or dot positions are represented by alternate phase.

The dipulse approach (i) allows of the dipulses $(\theta, \theta + \pi)$ and $\theta + \pi, \theta)$ and can therefore be used to represent 1, -1 coding, whilst (ii) allows only 1,0 coding. However careful consideration needs to be given to the dipulse approach on storage density, which might, superficially, appear to be halved. Figs. 2 (a) to (d) give examples of amplitude spectrum of various pulse trains with no phase inversion ((a) and (c)) and with the two types (i) and (ii) ((b) and (d)) referred to above.

In a known random phase technique, a random phase plate is placed in proximity to the scene in the image plane. If a non-random approach is taken, the phase plate would need to be precisely aligned with the data. Ideally one would like to be able to record the data to give the phase directly. This might be achieved for a reflective medium by recording on mesa or pits of height/depth differing by $\lambda/2$.

In those cases where the information is input to the system in the form of white spots on a black background reducing the width of the feature or spot size to a value that the system is incapable of resolving is another means of flattening the spectrum as the following Table I shows:

TABLE I.

| Relative Pulse Width | Relative Recording Level on Hologram | | Ratio |
|---|---|---|---|
| | $\omega = 0$ | $\omega_1 = \pi/2$ | $\omega_1/\omega$. |
| | centre of hologram | Offset from centre | |
| 1 | 1 | 0.64 | 0.64 |
| 0.75 | 0.56 | 0.43 | 0.76 |
| 0.66 | 0.44 | 0.36 | 0.81 |
| 0.5 | 0.25 | 0.22 | 0.88 |
| 0.25 | 0.0625 | 0.0609 | 0.97 |
| 1.5 | 2.25 | 0.675 | 0.3 |

The first column is the relative spot or pulse size; the second column is the relative amplitude at the centre of the hologram and the third column is the relative amplitude at a point in the hologram corresponding to a relatively high spatial frequency.

Keeping the width of the pulse slightly below the resolving power of the system is certainly not disadvantageous in terms of spectral flatness, but making it significantly greater than the resolving power certainly is.

Basic coding of binary information and in particular alternative forms of coding binary information in the input plane to achieve the maximum pattern separation in the Fourier transform plane will now be considered.

The most obvious way to code binary information in the input plane is in the form of a series of light pulses conveniently circular in shape, of diameter d and spacing $b^1$ (i.e. spots/dots). The value of d being as small as possible consistent with the resolving power of the optical system. In GB 2161263B such a method is discussed. The 1's and 0's may be coded by the presence or absence of light, or by the phase of the light wave. In the following on/off coding is symbolised by 1/0 and binary phase coding by 1/-1. Both arrangements thus involve "two-level coding".

Holographic filters are better discriminators of phase or positional information than they are of amplitude information and thus coding of information in phase-rich form is highly desirable. Whereas "two-level" coding was referred to above, this is not the only possibility and multilevel coding based on phase will be referred to hereinafter.

A two level coding scheme in which all of the bits are equally spaced is called "straight binary coding" or SBC. A distinction is made between binary codes and binary numbers. A conventional digital computer uses binary codes with binary numbers (e.g. 7 = 111) and some form of (near) non-redundant coding of other information such as alphabetical characters. In the following we are concerned with binary codes which may represent binary numbers and other information in a non-minimal or redundant form.

There are a number of alternatives to SBC which again may represent the basic information in redundant or non redundant form.

Some of these are:-

(a) Pulse Width Modulation (PWM) in which the pulse width is related to the basic information. For example, 4-bit binary numbers could be coded as sixteen different pulse widths.

(b) Pulse Position Modulation (PPM) in which the position of a single pulse is related to the basic information. For example, 4-bit binary number could be encoded into sixteen bit positions.

(c) Variable Position Binary Coding (VPBC) in which the binary code form remains but the pulses are not equally spaced ($b^1$ not constant). This reduces the correlation between a pulse train and a shifted version of itself.

(d) Frequency Coding (FC) in which a sine wave recorded in a window of limited spatial extent represents the basic information. For example 4-bit binary numbers might be represented by 16 frequencies between 1 cycle per window (c/w) and 16 c/w in steps of 1 cycle, or 0.5 c/w to 8 c/w on steps of 0.5 cycle.

(e) Pulse Coding (PC) which is as (d) but the information is represented by a number of equally spaced pulses, for example 1 to 16. PC is probably more convenient than FC for instrumentation of input plane information.

In attempting to compare these options (in the context of recording phase and amplitude) the following observations are relevant.

(1) The number of edges involved in representing information are a relevant indicator of separability because the edges provide the phase information.

(2) An efficient coding scheme will fully utilise the resolving power within the coding window, i.e. it will on average have a high edge density within the window,

On both these counts SBC scores highly, as does VPBC with short pulse trains (≤5bits), long pulse trains need a long coding window. Whilst some of the codes from FC and PC have a lot of edges, efficient use is not made of the window.

PWM is of interest in that it allows an analogue measure of nearness to be expressed in terms of the amplitude and spread of cross correlation terms in the Fourier plane, but has little else to recommend it.

It is normal to break binary coded information into field of a specific length. Binary numbers are often stored as 8 or 16 bit fields and operated on as 8, 16 or 32 bit computer words. Because alphanumeric textual information is normally in 8-bit (octet) form and numbers in multiples of 8-bits (e.g. a floating point number may consist of 4 octets) it is important to be able to work in terms of octets and concatinations of octets. Octet fields may thus be taken as in preferred form of non-redundant representation, with a fall back to 4-bit (quartet) form if redundancy coding considerations so justify.

Furthermore, it is necessary to prevent a pattern being confused with a shifted version of itself, and thus some form of field delimiter may be required. For on/off coding it is not sufficient to put spaces between the fields because an O is not distinguished from a space. For phase coding a space between fields may suffice, although if the "don't care" condition is allowed and it is represented by the absence of light, then ambiguity needs to be considered.

Adequate field delimitation for on/off or phase coding could comprise some form of two dimensional representation, for example a vertical bar or stripe at the front of each horizontal field.

On/off coding presents a potential problem in that the absence of a 1 bit represents a "don't care" situation. For example, in searching for bit strings 1101, an equal response will be obtained from 1111 and 1101. Whilst a "don't care" condition is valuable at a character level, it is an unwanted feature at the bit string level.

Binary phase coding also presents a problem in the absence of a phase sensitive detector, as the positive correlation of a code with itself cannot be distinguished from the negative correlation with its compliment.

A number of the schemes referred to above could be considered as potential candidates for a multi-phase version, however in view of the conclusions reached in connection with the two level case. The following is confined to the equivalent of SBC, which would be called Straight Multi-phase Coding (SMPC). This means that information is represented by a multi-phase pulse of constant width and spacing.

The most economical form of ternary coding is one in which the information is represented by $\theta$, $\theta$ + 180, and no light, which is conveniently abbreviated to 1, -1, 0 ($\theta$ is the phase of the light beam). Quaternary coding could be represented by $\theta$, $\theta$ + 120, $\theta$ - 120 and no light. Levels beyond the quaternary are possible but likely to present problems of inaccuracy doe to tolerence on phase. The use of "no light" as a "level" is perhaps not strictly phase coding, and what is proposed is perhaps more of a hybrid amplitude-phase code.

Redundant coding of binary information and the determination of the best compromise between code separation and code redundancy for correlation using matched Fourier transform plane filters will now be considered, first in terms of the two-level coding and subsequently for multi-level phase coding.

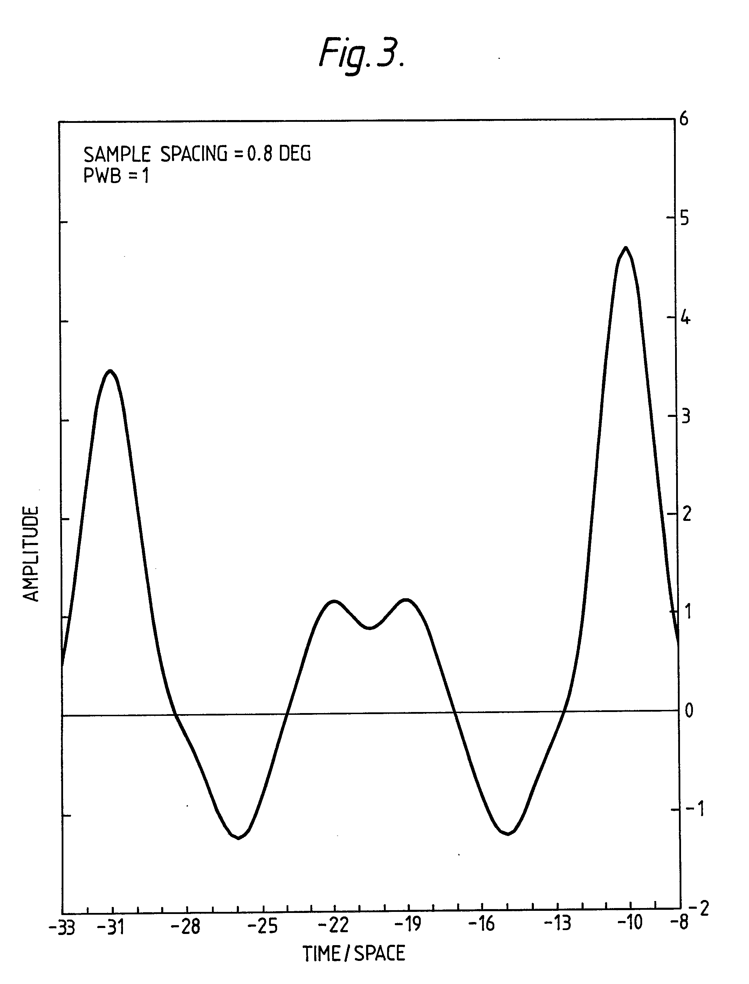

Fig. 3 shows the auto correlation peak (at -10) and the cross correlation peak (at -31) between two four bit patterns (represented by 1/0) having codes 1101 and 1100 of width 1AU (Arbitrary Unit) and spacing 4AU. The two fields are spatially separated by 21AU and are delimited. The ratio between the two peaks in this instance is 3,5/4.7 = 0.74. For N large and neglecting the effect of the delimiter this ratio would tend to R = (N-1)/N and the effect of the delimiter is to move the ratio even nearer to unity. This means that the fractional discrimination tends to 1/N, which for N large becomes a small quantity. It follows that all detection devices that are concerned in finding the highest peak must have a resolution accuracy better than 1/N but, and perhaps more importantly, on top of this it is necessary to illuminate the hologram (bearing in mind that a pattern match must be allowed anywhere within the active area) uniformly to within the remaining tolerance. From an engineering point of view a design with a large value of N is impractical and means must be found to improve discrimination. There is an analogous situation in linear threshold logic, e.g. Transistor-Resistor Logic, in which the fan-in is limited for essentially the same reason. The arbitrary target is to achieve a value of R = 0.5 but failing that a design with R = 0.67 could be considered. R in excess of about 0.8 is probably impracticable with current optical technology.

Redundant coding techniques, primarily in terms of SBC, will now be considered. Balanced codes are defined as ones with an equal number of 1's and 0's, so that by definition there will never be more or less than N/2 1's in a code of length N. If this requirement is combined with the requirement that all memories of the code set have a mutual Hamming distance of > = N/2 then the requirement for R < = 0.5 will be met. (N is assumed to be an even number). With balanced codes, binary phase coding and AND logic, the addition of a check bit (which can also act as a delimiter) can be used to resolve phase ambiguity and avoid the need for a phase sensitive detector. Constant N also avoids the "don't care" condition with on/off coding.

M out of N codes always have M ones in a code of length N. For M = 1 the coding arrangement becomes pulse position modulation PPM. Again there is a need to meet a Hamming distance requirement but for 1/0 coding the requirement is expressed by replacing N with M in the expression R = (N-1) /N. M out of N coding has the significant advantage that because M is constant there is no "don't care" condition within a bit string. M out of N coding does not apply to phase coding with AND logic because the O's are positively represented.

In the following Table 2 are summarised the results of calculating the number of available codes for various coding schemes and various Hamming distance requirements.

Table 2

| | M | 2 | 3 | 3 | 4 | Balanced |
|---|---|---|---|---|---|---|
| | HD | 2 | > = 2 | > = 3 | > = 4 | > = N/2 |
| N | R | 0.5 | 0.67 | 0.33 | 0.5 | 0.5 |
| 4 | 6 | | | | | |
| 5 | 10 | | | | | |
| 6 | 15 | 20 | 4 | | 4 | |
| 7 | 21 | 35 | | | | |
| 8 | 28 | 56 | 8 | 14 | 14 | |
| 9 | 36 | 84 | | | | |
| 10 | 45 | 120 | 12 | | 6 | |
| 11 | 55 | 165 | | | | |
| 12 | 66 | 220 | | 45 | 22 | |
| 13 | 88 | 286 | | | | |
| 14 | 101 | | | | | |
| 15 | 115 | | | | | |
| 16 | 130 | | | 56 | | |
| Number of Combinations Meeting Requirement | | | | | | |
| M = No. of ones | | | | | | |
| HD = Hamming Distance | | | | | | |
| R = unwanted peak/wanted peak | | | | | | |
| N = No. of bit position. | | | | | | |

The most suitable codes are, for a basic quartet field, two out of seven coding with an R value of 0.5 or, for a basic octet field, three out of thirteen coding with an R value of 0.67. Of these options the second is much to be preferred if only because it encodes octets but it does reduce the tolerance margin from 50% to 33%. The fact that the redundancy is in general so ineffective is because the redundancy increases the code length, making the distance criteria harder to meet in the process. It should be noted that either of the most suitable codes has some superfluous members, the quartet code five and the octet twenty; these could be employed in describing store partitioning, e.g. for boundaries within and between records or for encoding frequently encountered strings as one item.

The multi-phase ternary and quatenary codes described above have been investigated but no satisfactory means of using quaternary codes has yet been found. The ternary codes appear promising provided a check bit/delimiter is included to resolve the phase ambiguity between a code and its complement.

7

The ternary code in M out of N form allows the possibilities given in Table 3. The M's or "marks" are allowed to take the value +1, -1 and the not M's are 0 or spaces. This gives 4 combinations when M = 2, and 8 combinations when M = 3 for each M out of N code.

Table 3

| | M | 2 | 3 |
|---|---|---|---|
| | HD | 2 | > = 2 |
| N | R | 0.5 | 0.67 |
| 3 | | 12 | |
| 4 | | 24 | 32 |
| 5 | | 40 | 80 |
| 6 | | 60 | 160 |
| 7 | | 84 | 280 |
| 8 | | 112 | 440 |
| 9 | | 144 | 672 |
| Ternary coding, combinations meeting requirement | | | |

With ternary coding a 3 out of 7 coding scheme would appear to be very suitable . The use of a fixed number of marks avoids the "don't care" situation.

Thus, for two-level coding AND logic and freedom to use an arbitrary code there is no alternative but to use phase coding with a check bit or delimiter. By using a fixed number of 1's in an on/off code, or a ternary code with fixed number of marks, one can resolve the "don't care" problem and provide a code giving better discrimination.

With M out of N coding and M ≪ N the resultant code may be regarded as a "sparse" code when in on/off form but this is not the case with binary phase form because a set of edges are associated with the zero positions as well. With ternary phase coding the number of edges can be controlled and because they are of either sign, the coding possibilities are increased. A sparse code improves discrimination.

To summarise the above regarding coding of information, it can be said that since holographic filters are better discriminators of phase information than they are of amplitude, coding of information in phase rich form is highly desirable. Binary patterns of 1's and 0's represented by spots of light meet this requirement very well. There is a choice of coding 1's and 0's by the presence and absence of light, or by the phase of the light wave, or of using phase and/or amplitude in combination to achieve ternary or higher order coding arrangements. A coding scheme of the form M out of N where M is constant and there are M filled bit positions in a window of potentially N bits solves the threshold tolerance problem and the problems of "don't care" and phase ambiguity. Two preferred solutions are:

(a) a two level scheme where the M bits are represented by light of constant amplitude and phase and the other window positions are dark. The resultant code for octet data is 3 out of 13. The 3 out of 13 code replaces the basic octet and represents a redundancy of 1.625 times.

(b) a ternary scheme in which the M-bits are represented by light of constant amplitude but either of the reference phase or its complement, and the other window positions are dark. The resultant code for octet data is 3 out of 7, i.e. a compression.

The longer the character field length the more inefficient becomes the storage process. By representing the data as a number of relatively short concatinated fields, the storage associated with each field can be used relatively efficiently but the recognition process in general involves picking a set of concatinated character fields. This suggests a multi-stage recognition scheme. The first stage is character match and the second stage is recognising a set of matched characters in the correct relative juxtaposition.

The recognition of information consisting of a string of characters where these characters have already been "recognised" by a previous stage of processing will now be considered. The examples given are based on finding strings of alpha-numeric characters that are encoded, as discussed above, in redundant form. It does not matter if the first stage of processing uses two-level or ternary coding. The starting point is the assumption that characters in the input field will be matched against characters in the hologram containing the stored data. For example, to find all instances of "Alec Smith" in a data base of personnel records the string will consist of a 9 characters plus 3 spaces (leading, intermediate, trailing) giving an effective string recognition requirement of 12 characters. It is assumed that this string is stored in linear form, that is there are no physical store boundaries in the string. This can generally be assured at the expense of some wasted storage space by making sure that individual sentences or record fields do not cross such boundaries.

A first method is such that if one enters a string of characters of length M into the first stage and this string is identical with a stored string, a correlation signal will be obtained which is M times the amplitude (A) of the signal obtained for one character. A string of length M with one character that does not match will result in a correlation signal $C_S$ where $(M-1)A < C_S < MA$. The difference between M and $C_S$ depends on how well the mismatched character correlates with its counterpart. Discrimination to better than $(M-1)/M$ is clearly not possible for M large, and this is the reason why redundant coding was used in the first place. To overcome this problem the spacing of the characters in the string as sought is made slightly different from the spacing of the characters in the string as stored holographically. By this means, instead of getting one signal in the form of a spot of light of relatively high intensity, a pattern of M spots (of 1/Mth the intensity) is obtained and it is this pattern that the next stage of processing has to recognise. The individual spots will have the necessary margin for some non-linear device to discriminate against less than perfectly matched characters and provide an output that is an accurate representation as input to the second processing stage.

In the example of "Alec Smith" there will be twelve "spots" to be recognised or discriminated. For simplicity each spot will be regarded as a point source or a binary one. In fact each spot could be some simple pattern in its own right. The second stage of processing of "Alec Smith" is first regarded as that of recognising a set of 12 ones of known and fixed spacing. From the point of view of second stage processing there is no difference between strings of some specific length. For example, if the first stage had recognised the word "simplified" (i.e. 10 characters plus leading and trailing spaces) the second stage would not know the difference. In the second stage it is necessary to call up a set of holographic filters, one for each string length up to the maximum specified string length. For strings longer than the maximum string length, a two stage serial process will be required in which each sub-string is recognised separately and their relative positions correlated afterwards. Because the string length patterns are known and are limited in number they may be realised in computer generated phase-only form, for example by a photographic process, and positioned mechanically.

Suppose the string length is limited to 32 characters, at first sight the same problem as that which arose in the first stage appears to arise and in fact more severely, namely that of having to distinguish between a 32 character string in which 32 characters match from one in which 31 characters match. In fact the discriminating margin is only slightly better than that achievable at the first processing stage if the input character spacing was the same as the stored character spacing. However the output discrimination does not have to be perfect for the following reasons:-

(a) The output will indicate the positions of the first stage matches that are correct or nearly correct. Knowing these positions it is possible to go to them and count the number of ones that are the input to the second stage, thus establishing which is in fact correct.

(b) In general and particularly with textual information there is a large amount of redundancy in the data (language) and the probability of getting a long string that is almost identical with the required string is very low, thus the need to do much counting of first stage output would be limited. As the string gets shorter the chance of getting a similar string increases but this is counter-balanced by the fact that the fractional discrimination is better for short strings.

(c) There may be interest in a string that is close to but not identical with the one sought. For example "Alex Smith" as well as "Alec Smith" as a possible mistake on someone's part in recording or requesting information. An approach that rather than providing a perfect search reduces the options to humanly manageable proportions has much to commend it.

Clearly there are trade-offs between the separation of the input data and the degree of nearness that the system will handle. For example if the data were hash coded at source, then the strings would be shorter but nearer together in a way that was perhaps not very useful in terms of human perception. In this situation greater weight would have to be given to the counting process (a) above. It should be noted that hash coding is only appropriate to structured data. Hash coding of unstructured data would entail coding words such as "and, the, a" that are not generally of use in the retrieval process on their own.

In a second method which differs from that described above in that in the first processing stage instead of producing a set of M spots the difference in character spacing between the input and the stored information is made smaller, so that the spots merge to give a line of approximate length Ma, where a is the spot width. Any embedded character that do not match in the string will cause the line to be broken so that two or more lines will be obtained for any partially matched string. Because mismatches will result in reduced rather than zero output, a non-linear threshold device is still necessary to ensure that the line is truly broken and not just of variable intensity. This technique will be called "pattern substitution" and it shares some common ground with symbolic substitution as applied to optical logic.

For the second stage processing it should be noted that the discrimination between one line of some specific length and a chain line is not of the form M out of M-1, but rather of the form one or greater than one and this should ease tolerance requirements very considerably, particularly if phase only filters are used to emphasise edges. When the only mismatched character is at the end of the string rather than embedded in it, then the discrimination has to be between a line of length M and one of length M-1 and this is more difficult. (For example "Alec Smith" and "Alec Smithe"). Additional leading and trailing spaces would ease this problem or errors might be tolerated on grounds of nearness to the desired answer.

The above is an over simplification because the output of the first stage is not a single correlation spot but a spot with side lobes, these side lobes can add or subtract (depending on phase) from the principal lobes of the adjacent characters thus giving rise to crosstalk terms and hence degrading the discrimination between matched and mismatched characters. The crosstalk terms are due to the correlation of the bit string with a shifted version of itself and are only objectionable if they fall within the pattern substitution region in the input plane. To avoid them doing this, the bit spacing of the bits in the input character must be made greater than Ma or the rows of characters must be spaced apart by Ma (the pattern substitution symbol is then orthogonal to rather than in-line with the word string). The implications of this on bit packing density are considerable and are discussed below.

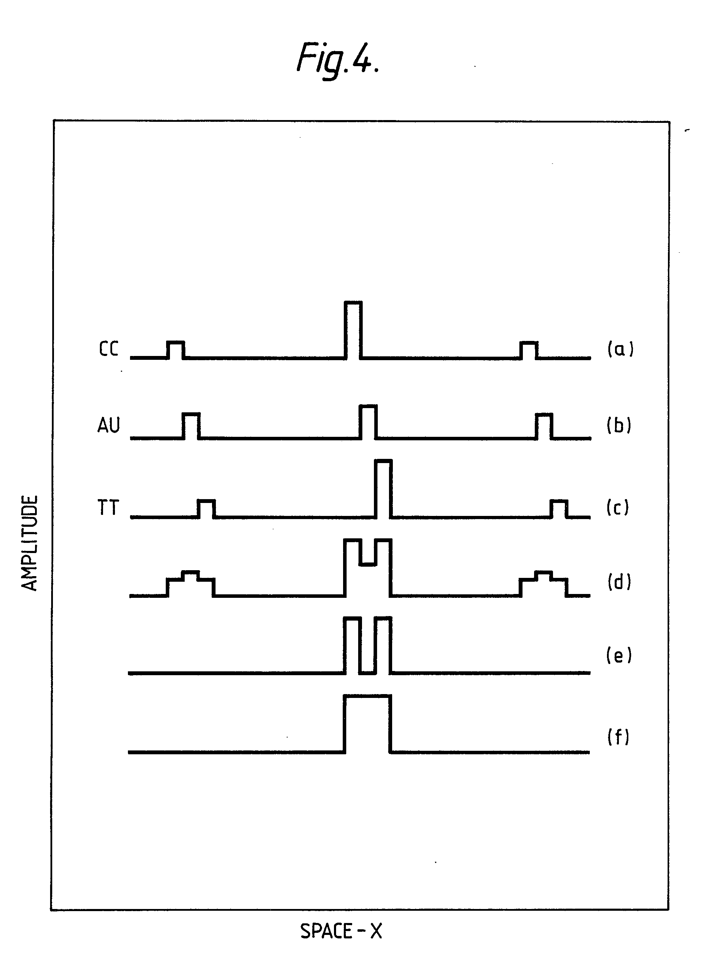

Figure 4 (a), (b) and (c) show individually the central region of the correlation pattern of three characters from two strings; (a) and (c) match with the target but (b) does not. For example, the two strings might be C-A-T and C-U-T. The central peak in each case is the wanted pattern resulting from aligned bit strings and the other peaks are sidelobes which result from the correlation of the patterns with shifted versions of themselves, When the character spacing on retrieval differs by one pulse width from that on recording, the resultant pattern is as (d). After being put through a threshold discriminating device, the input to the second stage would be as (e), which clearly shows the mismatch of the second character. Had the (b) term matched (i.e. A not U), the result would have been as in (f).

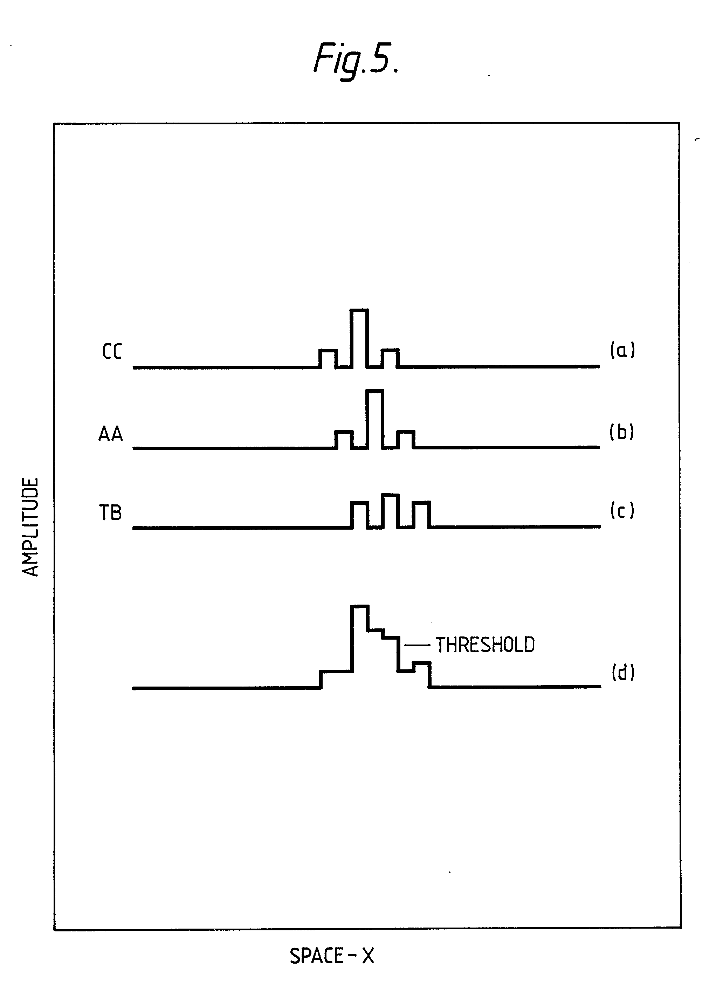

Figure 5 illustrates the need to keep the side lobes out of the region of pattern substitution. The sidelobes are close to the main lobe in this example and (c) is the mismatched term (for example C-A-T and C-A-B). With the threshold set as shown, an incorrect result would be obtained.

If instead of working in an in-line mode and changing the spacings (e.g. A B C to ABC) the characters are displaced orthogonally, viz:

ABC $_A$B$^C$

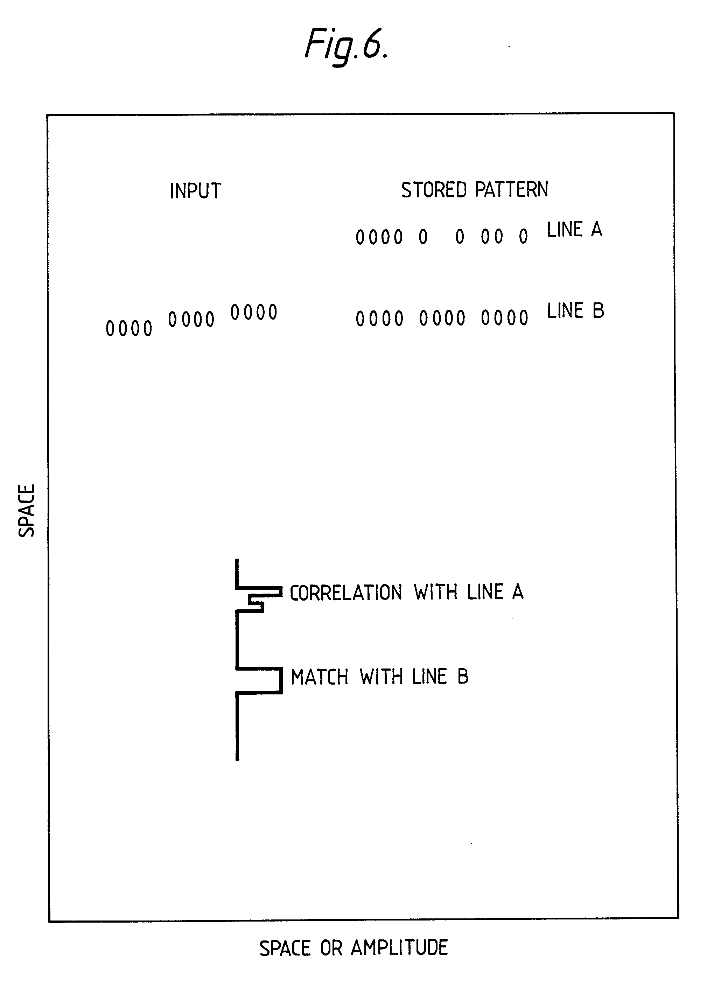

The situation is as illustrated in Figure 6, where the input and stored data are shown in plan view and the output is shown as an amplitude plot in the orthogonal direction.

The next step is to establish and compare the areas associated with these alternative approaches. Let the spot or bit size after first stage filtering be a, and let the minimum bit spacing be b, ($b_1 \fallingdotseq a$). Let the pattern substitution bar have a length $b_2 = Ma$, where M is the number of characters in the string. The input words consist of N bits plus a delimiter.

The absolute minimum length of the input word is:-

$(N + 1) (a + b_1)$

In the in-line case, the minimum length of the input word is:-

$(N + 1) (a + b_2 + b_1)$

and the spacing between lines of words is a minimum of $b_1$.

In the orthogonal case, the minimum word length is the absolute minimum and the spacing between lines of words is:-

$b_2 + b_1$.

Hence the area per word for the in-line case is:-

$b_1(N+1)(a+b_2+b_1) = (N+1)(ab_1 + b_1^2 + b_2b_1)$

and in the orthogonal case is:

$(b_2 + b_1)(N+1)(a+b) = (N+1)(ab_2 + ab_1 + b_1^2 + b_2b_1)$.

Thus the in-line case uses slightly less area, by an amount $ab_2$, per word. If $a = b_1$, then the area for the in-line case, A, is:-

$A = a^2 (N+1)(M+2)$

and the information density is given by I/A. Now, N is related to the system tolerance and if the basic input information is considered as being text using 8-bit characters, the density achievable can be calculated as a function of the threshold tolerance and the method of coding, redundant or otherwise. The threshold tolerances for five different first stage coding methods are quoted in Table 4.

Table 4

| Coding of words, 1st stage | Threshold Tolerance |
|---|---|
| (a) Double non-redundant 8 bit words | 6% |
| (b) Single non-redundant 8 bit words | 11% |
| (c) 3 out of 13 coding | 30% |
| (d) 2 out of 7 coding | 50% |
| (e) 3 out of 7 ternary coding | 30% |

In case (a) M becomes M/2 and in case (d) M becomes 2M. The area per string in each case is as in Table 5.

Table 5

| Area | Area for M large |
|---|---|
| (a) $17a^2 (2 + M/2)$ | $8.5Ma^2$ |
| (b) $9a^2 (2 + M)$ | $9 Ma^2$ |
| (c) $14a^2 (2 + M)$ | $14 Ma^2$ |
| (d) $8a^2 (2 + 2M)$ | $16 Ma^2$ |
| (e) $8a^2(2 + M)$ | $8 Ma^2$ |

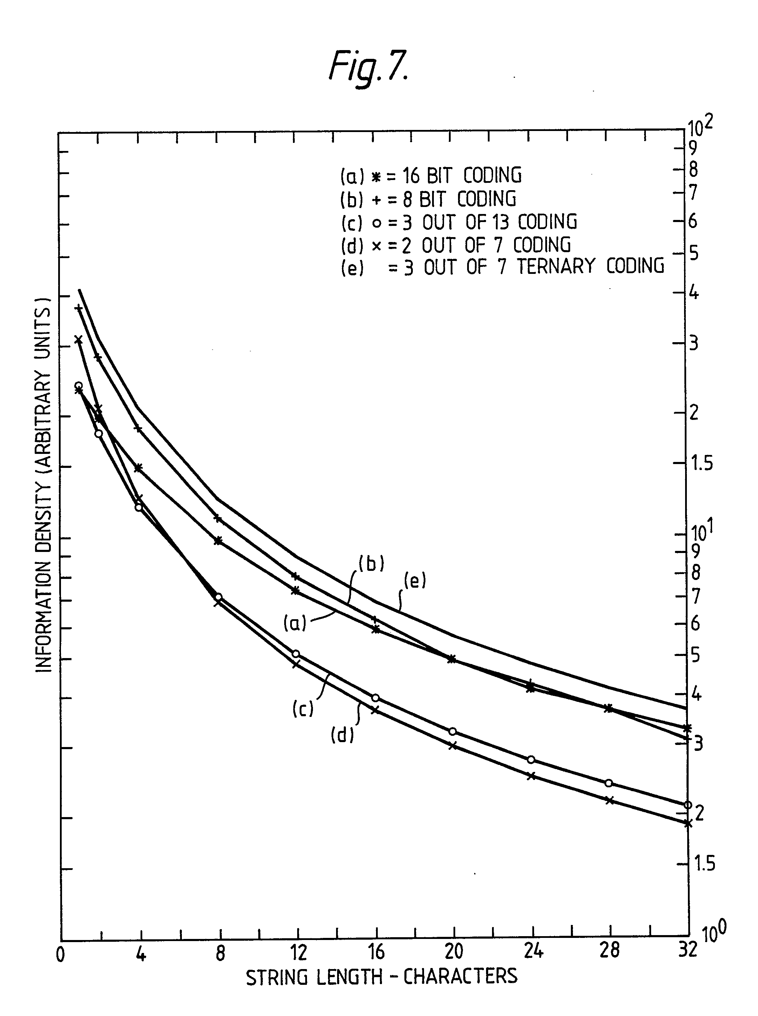

These five cases are plotted in Figure 7 which indicates information density as a function of string length. Clearly the dominant factor is the length of the string, although the redundancy factor is also important. The fact that tolerance considerations result in discrete and specific coding algorithms for the first stage, means that the effect of tolerance on storage density is not a smooth function.

The possibilities for character stagger are not limited to the in-line and orthogonal cases referred to above. It is possible to combine them to produce two-dimensional patterns e.g. slant lines or snakes. However, folded patterns such as polygons are not permissible because they result in intersymbol interference. The choice of pattern does not have more than a second order effect on the redundancy factor and choice is best determined by how easily the pattern is discriminated in the second processing stage. There is no obvious advantage in departing from a discrimination based on the difference between a simple bar and a broken bar.

As a general statement, the storage density for a long string is given by:-

$$\frac{1}{A} = \frac{R}{Mf(T)}$$

where k is a constant and f(T) is a function of the threshold tolerance which increases with that tolerance. In practice, and with an appropriate choice of k, then $1 \leq f(T) \leq 2$ for a tolerance range of 5% to 50%.

In summary, therefore, a two-stage recogniser based on pattern substitution will need to trade string length against the storage density of first stage data. The trade-off arises because the pattern that is input to the second stage must be generated by the first stage in regions of the first stage's output plane that are free from unwanted correlation terms. Such free regions can only be obtained at the expense of a lower average information storage density.

The fact that the two stage approach gives rise to a reduction in information storage density in the first stage, creates a suspicion that equivalent results might be obtained by using the "wasted" space in the first stage to increase still further the redundancy of the information encoded there, and to disperse with a second stage altogether. No means have been found of achieving that.

The effect of simulating a four character string, in which the third character does not match with the other three, has been investigated for various filter bandwidths, sample spacings and character stagger. The results are given and compared with single characters in isolation in Table 6.

TABLE 6

| Configuration | Sample spacing degrees | PWB | Stagger | Ration Matched, Mismatched |
|---|---|---|---|---|
| Isolated | 2 | 4 | N/A | 1.35 |
| Isolated | 2 | 2 | N/A | 1.35 |
| Isolated | 2 | 1 | N/A | 1.35 |
| Isolated | 1 | 1 | N/A | 1.34 |
| Isolated | 2 | 1,0.4,0,4* | N/A | 1.34 |
| Isolated | 2 | 2,0.8,0.8* | N/A | 1.34 |
| String (Fig.9) | 2 | 4 | 10 | 1.23 |
| String | 2 | 4 | 9 | 1.14 |
| String | 2 | 2 | 10 | 1.24 |
| String | 2 | 1 | 11 | 1.20 |
| String (Fig.8) | 2 | 1 | 10 | 1.24 |
| String | 2 | 1 | 9 | 1.15 |
| String | 1 | 1 | 10 | 1.25 |
| String | 2 | 1,0.4,0.4* | 7.5 | 1.31 |
| String (Fig.10) | 2 | 2,0.8,0.8* | 8 | 1.36 |

* Object, scene, reference beam.
PWB is the product of spot size and holographic filter bandwidth. Sample spacing is related to the sampling interval used in simulation.

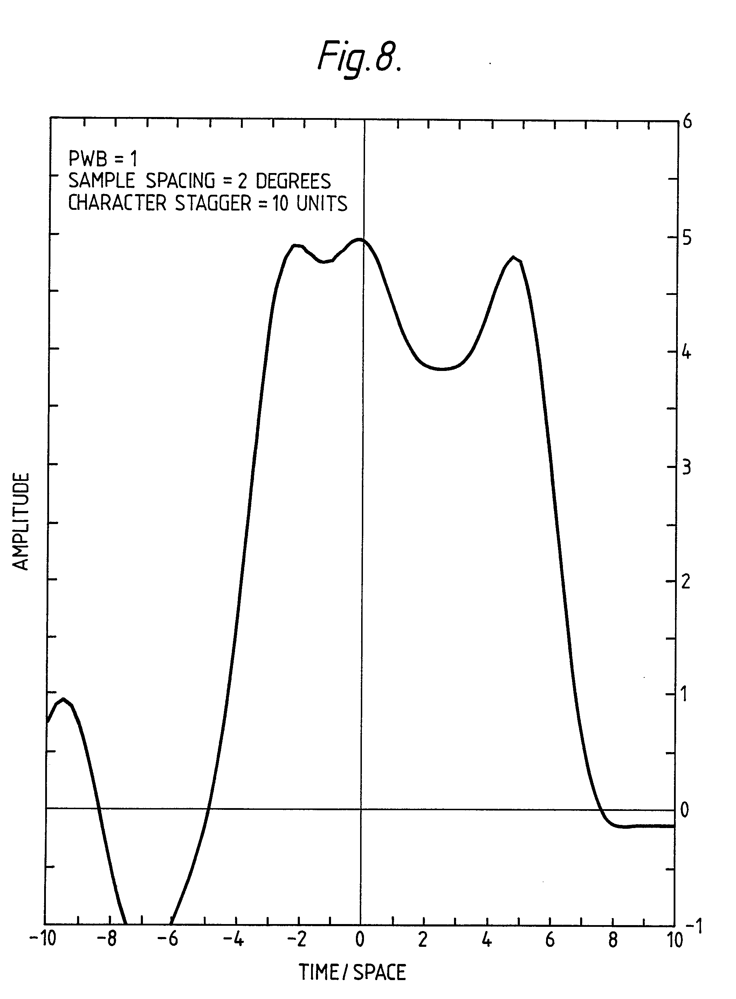

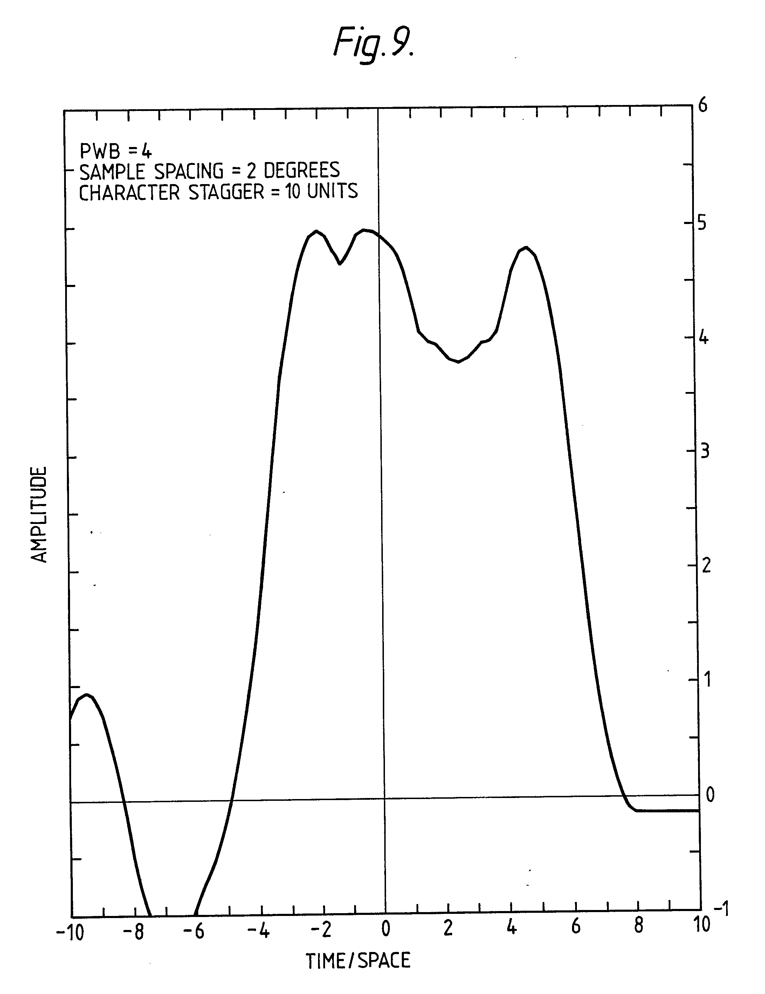

Figures 8 and 9 show the waveform resulting from two of the simulated conditions. Stagger is measured in arbitrary units and is ten times the pulse width, which means that with four pulses the pulses are 10/4 = 2.5 times their original width. Thus the pulse shape is far from perfectly preserved as is assumed in Figure 4. It was anticipated that a large value of PWB would give better results because the shape of the pulse is better maintained but this proved not to be the case. On consideration, it is apparent that the shape of the correlation pulse is not a replica of the reference beam but is extended depending on the degree of overlap (i.e. the widths) of the beams representing the scene and object bits. This results in the correlation pulse having sloping sides and explains why increasing the bandwidth of the system has negligible effect. In the simulations (except where indicated) all three beams were given a pulse width of one unit. If the reference beam had been a true delta function, then assuming a perfect system, the correlation pulse would be triangular with a base equal to the sum of the widths of the other two beams. The effect of the sloping sides is to cause inter-symbol interference, making discrimination when in the string inferior to that when the characters are in isolation.

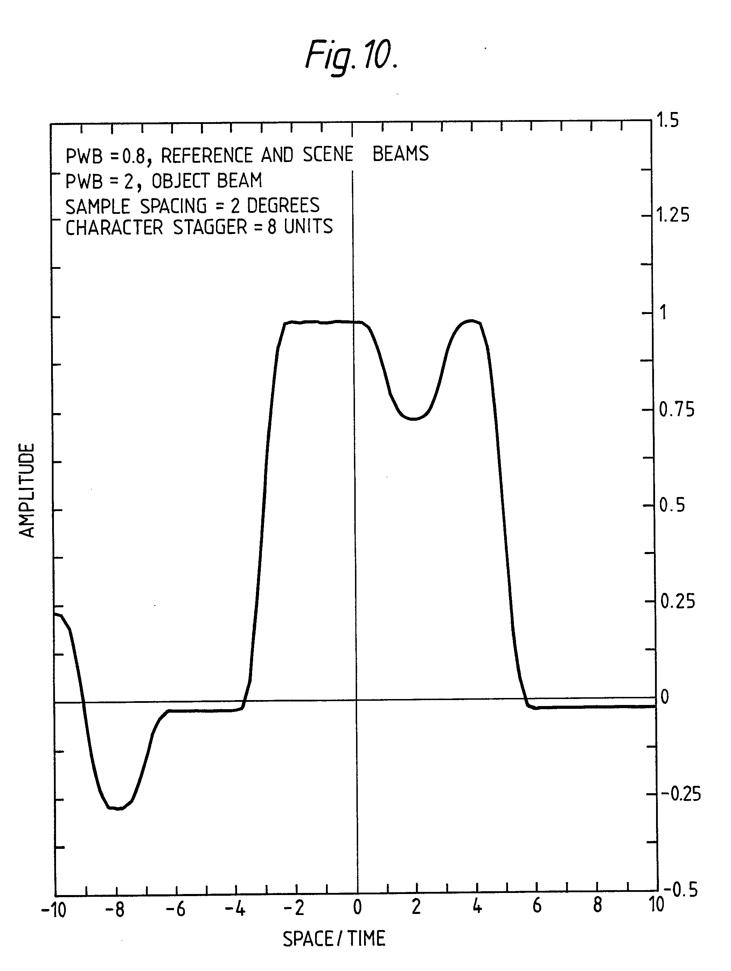

This situation can be remedied by making the sum of the width of two of the beams less than the width of the third beam, in a technique called "correlation symbol spread reduction" (CSSR). The asterisked results in Table 6 are for the case where the reference and scene beams are 0.4 of the width of the object beam and it is then apparent that the on/off ratio is much closer to the ratio achieved in isolation. From the point of view of the simulation, the relative width of the beams is arbitrary but in practice it would be necessary to match the bandwidth of the system to the narrow beams. This implies that the width of the third beam would have to be increased and it would therefore be inadvisable to make the third beam the object beam because the data density would then be reduced. Once CSSR is introduced the performance of the system is seen to degrade both in amplitude and space discrimination if the PWB is reduced much below unity. Figure 10 shows the second set of CSSR results in Table 6. It should be noted how much steeper the sides of the pattern are compared with those of Figures 8 and 9 and how it is a true pedestal. The above simulation demonstrates that the pattern substitution technique is feasible, albeit at an appreciable reduction in storage density.

Some of the problems of side-lobe interference disappear if each character (or a few characters) is (are) presented serially rather than the string being presented as one. Matched characters are detected as having their main lobe above threshold and the position of this main lobe is stored. The next character in the string is presented and if this has the correct relationship to the first character its main lobe will abut the main lobe of the first character and be stored and so on. Thus there is no need for the bit spacing to be increased by M to avoid inter-character side lobe interference and there is therefore a reduction in storage redundancy. A sparse form of coding, for example 3 out of 13, is still assumed, however. At first sight the disadvantage of this serial recognition approach is that it takes longer and while this is true within one frame of information, it is not necessarily so if the search procedure involves searching many frames, as will generally be the case.

The following is a formal description of the trade offs:

(a) Let $t_f$ be the frame rate and $t_c$ the sub-string search time within the frame. Thus $t_c = qt_f$ where q is a constant.

(b) Let M be the string length searched for each serial step and S be the length of the string sought by the user (S M).

(c) Let D be the size in characters of the data base to be searched.

(d) Let $C = C_o/M$ be the number of characters loaded into each frame. $C_o$ is the value of C which applies for a string length of one character (M = 1) and is the maximum data per frame which coding and optical limitations will allow.

The total search time is given by:-

$$T = t_f D/C + t_c S/M$$

(D/C and S/M being rounded up to the nearest integer).

From the above definitions we can rewrite T as:-

$$T = t_f(D M/C_o + sq/M)$$

This expression has a minimum when dT/dM = 0 i.e. $M^2 = SC_oq/D$

M can never be less than one and with D SC_oq, as will generally be the case, M = 1 is the optimum string length. Note that in practice q may well be less than one.

The limitations set by intra-symbol interference are now considered. In a bandwidth limited optical system (when attempting to match a single character in isolation) the minimum bit spacing is determined by the crosstalk of intra-symbol (intra-character) interference between adjacent correlation peaks. The closer the bit spacing the more probable that the amplitude of the wanted peak will be influenced by the skirts of an unwanted adjacent peak. This situation has been investigated by simulation. First it is assumed that one has a unit bit position or width that matches the available bandwidth, i.e. that PWB = 1. It then transpires that the spacing between ones has to be at least two units in order to reduce intra-symbol interference to an acceptable level. This applies in two dimensions so that the gap between rows has to be at least two units as well as the gap between bits of a word within a row. This does not mean that the coding density decreases by a further factor of nine because it is possible to devise codes for which the use of adjacent bit positions is not allowed. For example, the 3 out of 13 code becomes a 3 out of 17 code, implying that in a three bit code there are 17 - 13 = 4 disallowed bit positions. We also need two bit positions between words and if a delimiter is required another 3 bit positions must be added. Thus an octet of data occupies, with a delimiter, 23 units or bit positions. The coding density is reduced by a factor of 3 x 23/8 = 8.625 in comparison with the case where there is no redundant coding and zero spacing between bits. If no delimiter is required then the redundancy factor reduces to 7.5 times.

There is a limitation set on string length by the fact that the result of string recognition is still a line, albeit a line produced in a step by step fashion rather than in one go, and this line is limited to less than a character length if the possibility of joining up with adjacent recognition peaks associated with the next character in the string is to be avoided. The simulations show that the correlation peak is likely to have a width of the order of 20% greater than the input pulse, thus in the case where there is a delimiter the string length is limited to (23-1) /1.2 = 18 characters and when there is no delimiter to 14 characters. Strings exceeding these lengths will entail a multi-step search procedure.

Some statistics have been produced on the length of strings used for keyword searching in plain text, with the following results:-

(a) Word distribution is quite a good approximation to log-normal or log-logistic.

(b) Mean length of single words = 5.4 characters.

(c) Average number of words in a string = 1.66. Allowing a leading and trailing space for each string gives an average string length rounded up to the next highest integer of 12 characters. The probability that a string exceeds 18 characters is estimated at about 0.1. Thus one in ten searches would require a multi-step operation.

Character strings should not be allowed to cross store row boundaries and the number of words that can be entered in one row of store is limited. Hence there is quite a high probability that the words of a multi-word string will be in different rows of the store (splitting or hyphenating words between rows would be disallowed on input). Thus a word at a time search strategy for multi-word strings would seem to have advantages. In this case the probability of getting a single word of more than 16 characters is quite low, of the order of 0.01.

Word aligned (structured) and free text searching will now be considered. In the programming language Prolog, for example, the process of unification involves searching a data base of items. In one implementation of Prolog at least the items are hash coded. Hash coding is normally used in digital computers as a means of indexing but also has the property of recoding variable length fields into fields of constant length. There is no guarantee with hash coding that there is a one to one relationship between the hash code and the original, but by making the hash code longer, the probability of this happening can be reduced. Because of the constraints on letter order in textual material, the probability can be made quite low for a comparatively short hash code. A hash code of 5 characters allows $5^{26}$ = $10^{18}$ possibilities, for far more words than there are in the English language. Provided duplicate codes are a relatively rare occurrence it does not matter, because further checks can be made once the search has been narrowed. If on data entry the hash code of the data were to be stored in the same field in, say, entry order, for example:-

John Smith XPZHJ
William Brown YOVNT
Cuthbert Blenkinsop LSPQJ
Samuel Bekett VTZAP

Then a search could be made on the table of hash codes, finding the hash code is then a pointer to the actual text. To apply this to free text, however, is much more difficult because the material is not structured, one does not have a priori knowledge of the search criteria and most of the material does not consist of key words anyway.

In the context of an optical search strategy hash coding results in word alignment because the word length is fixed, hence the positions of the correlation peaks in the output plane of the correlator are predictable and the search for those peaks can be confined to the columns in which they must lie. This means too that a word delimiter is no longer necessary, thus increasing the coding density. If a two stage recogniser is used, then the second stage has only to recognise one string length, making for further simplification.

The adoption of a serial approach to string recognition has a marked effect on the design of the second stage of the correlator. The second stage now requires to remember the signals above threshold and store them until all the characters in the input string have been processed. For this and other reasons, an electronic rather than optical second stage may be preferable. A possible approach to the design of such a stage comprises an output plane detector consisting of photo-activated semiconductor memory with shift register output and which works as follows:-

(a) The correlation signals are focussed onto photodetectors which trigger semiconductor memory elements into one state provided the signal is above a predetermined threshold. The memory elements remain in the one state until read out or the store is reset.

(b) When the input string has been completely read in, all rows of the store together are read out serially, each into its own counter which counts ones and is reset on a zero. If at any time during this process a counter reaches a value corresponding to the length of the string, then this is recorded in terms of the position in the store where this string is to be found.

(c) On completion of read out, the store is reset in one operation and is ready to receive the next word in the current string or the next search command.

Note that the first stage hologram remains fixed during the string search and only the content of the scene field has to be changed. As the scene field contains only the search string presented a character at a time, this can be generated electronically in a period of time that is very short compared with the frame time i.e. q is very small.

The problems of inter-symbol and intra-symbol interference complicate the design of a string recogniser. In order to reduce the problem of threshold tolerance, amplitude (which might be considered as corresponding to space in the z-direction) has been traded for space in the x and y directions. Only interference-free space can be used for pattern formation and hence the coding becomes sparse and the data density falls.

As will be appreciated from the above, the present invention is concerned with searching for binary-coded alpha-numeric character strings embedded in large volumes of data using holographic matched filters and this demands close tolerance threshold in order to distinguish the wanted string from like strings.

Close tolerance logic is difficult to achieve optically and so there is proposed a two-stage holographic correlator in which the first stage recognises coded characters and the second stage recognises when these characters are adjacent to each other. Furthermore, it is proposed to make the spacing of the characters in the string as sought slightly different from the spacing of the characters as stored in the data base. Thus a matching string instead of producing one high intensity spot will produce a "shape" of some sort, most conveniently a set of spots which are merged to from a straight line. This technique is called pattern substitution. If one character in the string does not match the line will be broken and by the use of a non-linear thresholding device the break can become an on/off one rather than a difference in intensity. The substitute pattern is fed into the second stage of the recogniser which only has to distinguish a line of some specific length from a broken line, and bearing in mind that holographic filters are good distinguishers of phase information, this is not an onerous requirement. It is to be noted that the second stage recognition process is only dependent on the length of the string and not its character content. There is however a price to be paid for this which arises from cross correlation terms between a bit string and a shifted version of itself. These terms should not be allowed to fall within the region of pattern substitution and to avoid this happening, the spacing between the M bits in an M out of N input code must be increased. This reduces the coding density by a factor that increases with string length and approaches ten for a string of 32 characters.

## Claims

1. A holographic optical correlator including a matched optical filter (Fig. 1a) and coupled thereto a control means (Fig. 1b) including a memory (11), and wherein in use for searching the memory for occurrences of an item the control means controls the input (2) and Fourier transform (4) planes of the filter and a coherent light source for parallel optical processing of the memory content and the output plane (5) of the filter provides information to the control means as to the location in the memory of occurrences of said item, characterised in that the said item in the input plane is a coded pattern and the memory in the input plane comprises a plurality of similarly coded patterns and wherein the code comprises an M out of N code, where M is a constant.

2. A correlator as claimed in claim 1 characterised in that the coding is a sparse coding and comprises 3 out of 13 for octet data.

3. A correlator as claimed in claim 1 or claim 2, and comprising a two level code, ones and zeros being represented by the presence and absence of spots of light.

4. A correlator as claimed in claim 1 or claim 2, and comprising a two level code, ones and zeros being represented by respective light wave phases.

5. A correlator as claimed in claim 1 characterised in that the code is a ternary code involving light of constant amplitude but of either a reference phase or its complement, and the absence of light.

6. A correlator as claimed in claim 1 characterised in that the coding comprises Straight Multi-Phase Coding (SMPC).

7. A correlator as claimed in claim 1 characterised in that the coding comprises two level, two out of seven coding for quartet data.

8. A correlator as claimed in claim 1 characterised in that the coding is a ternary scheme comprising three out of seven.

9. A correlator as claimed in claim 1 characterised in that the coding is chosen to provide a flat frequency spectrum in the Fourier transform plane whereby uniformity of recording is achieved when holographic material of small dynamic range is employed in the Fourier transform plane.

10. A holographic optical correlator including a matched optical filter (Fig. 1a) and coupled thereto a control means (Fig. 1b) including a memory (11), and wherein in use for searching the memory for occurrences of an item the control means controls the input (2) and Fourier transform (4) planes of the filter and a coherent light source for parallel optical processing of the memory content and the output plane (5) of the filter provides information to the control means as to the location in the memory of occurrences of said item, characterised in that the said item in the input plane is a coded pattern and the memory in the input plane comprises a plurality of similarly coded patterns and wherein to achieve uniform hologram illumination in the Fourier transform plane and high diffraction efficiency of holographic material of small dynamic range employed in the Fourier transform plane means are provided to add a non-random phase variation whereby information to be recorded has a flat frequency spectrum.

11. A holographic optical correlator including a matched optical filter (Fig 1a) and coupled thereto a control means (Fig. 1b) including a memory (11), and wherein in use for searching the memory for occurrences of an item the control means controls the input (2) and Fourier transform (4) planes of the filter and a coherent light source for parallel optical processing of the memory content and the output plane (5) of the filter provides information to the control means as to the location in the memory of occurrences of said item, characterised in that the said item in the input plane is a coded pattern and the memory in the input plane comprises a plurality of similarly coded patterns and wherein to achieve uniform hologram illumination in the Fourier transform plane and high diffraction efficiency of holographic material of small dynamic range employed in the Fourier transform plane the feature or spot size of the coded patterns is reduced to a value which the system is incapable of resolving whereby information to be recorded has a flat frequency spectrum.

12. A correlator as claimed in claim 1 characterised in that the information is input to the system in the form of white spots on a black background.

13. A correlator as claimed in any one of the preceding claims and characterised in that it comprises a two-stage recognition system, wherein the item to be recognised comprises a string of characters, and in a first stage individual characters of the string are matched and in a second stage means are provided to recognise when the sets of matched characters are in correct relative juxtaposition for string recognition.

14. A correlator as claimed in claim 13, and employing pattern substitution techniques and including means such that the spacing of characters in strings to be sought differs from the spacing of strings of the memory as input to the input plane so that corresponding correlation patterns are produced, and wherein the second stage picks strings of the required pattern shape irrespective of their contents.

15. A correlator as claimed in claim 14, wherein the correlation pattern is a line and the second stage serves to recognise lines of a particular length.

16. A correlator as claimed in claim 15, and involving scene and object set of beams and reference beam and wherein the sum of the width of any pair of said beams or set of beams is less than the width of the other beam.

17. A correlator as claimed in claim 14, wherein each matched character is presented serially to the second stage for detection and recognition thereby if correctly juxtaposed relative to the preceding character.

18. A method of searching a data base for occurrences of an item including the steps of forming a hologram of the data base in the Fourier transform plane of a matched optical filter and loading the item sought in the input plane of the matched optical filter, illuminating the item sought with coherent light of the same wavelength as employed to produce the hologram, filtering the light in the Fourier transform plane, and detecting any correlation, and thus recognition, of the item sought and the data base at the output plane of the matched optical filter, characterised by the steps of coding the item sought and the data base by means of an M out of N code, where M is a constant.

19. A method as claimed in claim 18, characterised in that the code is a sparse code and comprises 3 out of 13 for octet data.

20. A method as claimed in claim 18, characterised in that the item recognition is performed in two stages and the item comprises a string of characters, wherein in a first stage individual characters of the string are matched, and wherein in a second stage, a pattern substitution technique is employed to determine when the sets of matched characters are in correct relative juxtaposition.

21. A holographic optical correlator arranged to recognise strings of characters and comprising a two-stage recognition system, wherein in the first stage individual characters of the string are matched and in the second stage means are provided to recognise when the matched characters are in correct relative juxtaposition for string recognition.

# Fig.1a.

# Fig.1b.

EP 0 384 556 A2

# Fig.2.

(a) SINGLE PULSE

(b) SINGLE DIPULSE

(c) FOUR PULSES OF THE SAME PHASE

(d) FOUR PULSES OF ALTERNATING PHASE

AMPLITUDE IN ARBITRARY UNITS

SPATIAL FREQUENCY IN RADIANS

Fig.3.

# Fig.4.

# Fig.5.

CC (a)

AA (b)

TB (c)

AMPLITUDE

THRESHOLD

(d)

SPACE - X

Fig.6.

SPACE OR AMPLITUDE

# Fig.7.

(a) ∗ = 16 BIT CODING
(b) + = 8 BIT CODING
(c) ○ = 3 OUT OF 13 CODING
(d) × = 2 OUT OF 7 CODING
(e)    = 3 OUT OF 7 TERNARY CODING

Fig.8.

## Fig.9.

PWB = 4
SAMPLE SPACING = 2 DEGREES
CHARACTER STAGGER = 10 UNITS

AMPLITUDE

TIME/SPACE

## Fig. 10.

PWB = 0.8, REFERENCE AND SCENE BEAMS
PWB = 2, OBJECT BEAM
SAMPLE SPACING = 2 DEGREES
CHARACTER STAGGER = 8 UNITS

AMPLITUDE

SPACE / TIME